Europäisches Patentamt

European Patent Office

Office européen des brevets

(11) Numéro de publication: **0 309 339 B1**

# (12) FASCICULE DE BREVET EUROPEEN

(45) Date de publication de fascicule du brevet: **09.09.92**   (51) Int. Cl.⁵: **C11B 9/02**

(21) Numéro de dépôt: **88402373.0**

(22) Date de dépôt: **21.09.88**

(54) Procédé de préparation d'un extrait de jasmin et extrait obtenu.

(30) Priorité: **22.09.87 FR 8713081**

(43) Date de publication de la demande:
**29.03.89 Bulletin  89/13**

(45) Mention de la délivrance du brevet:
**09.09.92 Bulletin  92/37**

(84) Etats contractants désignés:
**AT BE CH DE ES GB GR IT LI LU NL SE**

(56) Documents cités:
**FR-A- 2 448 567**
**US-A- 2 184 637**

**CHEMICAL ABSTRACTS, vol. 96, no. 16, avril 1984, page 445, no. 129563x, Columbus, Ohio, US; N.V. SERGEEVA et al.: "New method for rose oil production"**

**CHEMICAL ABSTRACTS, vol. 100, no. 16, avril 1984, page 345, no. 126706m, Columbus, Ohio, US; G. PAPANOV et al.: "Technology for the extraction of aromatic and biological-ly active compounds remaining after extraction in blossoms of Rosa damascena Mill and after distillation in blossoms of Lavandula vera D.C."**

(73) Titulaire: **ELF SANOFI**
**32-34, rue Marbeuf**
**F-75008 Paris(FR)**

(72) Inventeur: **Ambid, Christian**
**111, route de Tarbes**
**31170 - Tournefeuille(FR)**

(74) Mandataire: **Gillard, Marie-Louise et al**
**Cabinet Beau de Loménie 55, Rue d'Amster-dam**
**F-75008 Paris(FR)**

## Description

La présente invention concerne un procédé d'obtention de substances odoriférantes présentes dans la fleur de jasmin et les extraits ainsi obtenus.

Les extraits de jasmin sont utilisés en parfumerie et cosmétique, plus particulièrement ceux du jasmin de l'espèce Grandiflorum, et, comme la culture de cette plante est délicate et que la cueillette nécessite une main-d'oeuvre abondante, il est très souhaitable d'obtenir avec un rendement élevé un extrait au parfum puissant, agréable et si possible proche de celui de la fleur naturelle. L'extraction des substances aromatiques de la matière végétale par entraînement à la vapeur d'eau ne convient pas pour cette fleur, car elle dénature certains des composants aromatiques, et on fait appel actuellement uniquement à deux procédés : l'extraction par enfleurage au moyen de corps gras ou l'extraction par des solvants apolaires, comme l'hexane, le benzène ou l'éther de pétrole. La composition des produits obtenus par ces deux procédés est sensiblement différente ; dans le concentré de pommade, obtenu par enfleurage, on trouve une proportion non négligeable d'indole, d'anthranilate de méthyle et d'eugénol qui ne sont présents qu'à l'état de traces dans "l'absolu", qui est isolé lors de l'extraction par solvant, après distillation de ce dernier et élimination des cires. Ces extraits contiennent de nombreux composés, comme le montre l'analyse chromatographique d'un absolu de jasmin décrite par M. VERZELE dans JOURNAL OF CHROMATOGRAPHY, 205, p 367-386 (1981).

On a maintenant trouvé qu'il reste dans les fleurs de jasmin, dont les composés odorants volatils ont été extraits par la méthode classique dans un solvant hydrocarboné, des precurseurs qui peuvent libérer des composés odorants après leur hydrolyse chimique ou enzymatique. On pense que ces précurseurs sont des glycosides, dont les aglycones sont des composés odorants volatils, mais d'autres précurseurs peuvent être présents, et l'invention ne saurait être limitée à un procédé mettant en oeuvre uniquement des glycosides.

La présente invention a pour objet un procédé d'obtention d'une composition odorante de jasmin qui consiste à hydrolyser le produit extrait des fleurs par traitement avec un solvant polaire ; l'extraction peut être effectuée sur les fleurs telles que récoltées ou sur le résidu végétal isolé après le traitement des fleurs avec un solvant apolaire pour préparer, selon le procédé classique, un "absolu" de jasmin.

Parmi les solvants polaires utiles pour extraire, selon le procédé de l'invention, les produits hydrolysables, précurseurs de composés odorants, on préfère, notamment pour des raisons de coût, les solvants aqueux, comme l'eau naturelle ou celle dont le pH est fixé à une valeur comprise entre 4 et 6 par addition d'un mélange tampon, ou comme le méthanol ou l'éthanol aqueux contenant au moins 20 % d'eau (v/v) ; on effectue de préférence 2 à 3 extractions successives pour épuiser la fleur. Les fleurs fraîches sont, par exemple, mises en suspension 3 fois pendant 1 heure environ dans 2 à 3 l d'eau à pH 6 par kg de fleurs, à la température ambiante et les phases aqueuse réunies, après séparation du matériel végétal, sont traitées pour hydrolyser les précurseurs qu'elles contiennent.

On préfère effectuer l'hydrolyse par voie enzymatique plutôt que par voie chimique en milieu acide, car certains composés odorants constitutifs de l'arôme de jasmin sont peu stables en milieu acide, ce qui impose de contrôler la durée et la température de l'hydrolyse acide.

L'hydrolyse enzymatique est catalysée par de nombreuses hydrolases, et particulièrement celles présentant une activité $\beta$-glycosidasique. On trouve dans le commerce de nombreuses enzymes de ce type pouvant convenir, généralement sous forme de complexes enzymatiques, aux activités diverses ; le technicien pourra, lors d'un essai préalable sur une partie représentative de précurseurs, déterminer quel complexe enzymatique est particulièrement avantageux, en fonction de la note aromatique recherchée pour la composition finale.

Parmi les complexes utilisables, on peut citer : la $\beta$-glucosidase d'amande douce commercialisée par Sigma, les cellulases de type Rohament C commercialisées par Rohm et Hass ou les hémicellulases et certaines pectinases commercialisées par Gist Brocades.

Les enzymes peuvent être utilisées en solution dans le milieu liquide ou immobilisées sur un support en suspension dans le milieu, ou placées dans une colonne dans laquelle circule la solution de précurseurs ; l'hydrolyse est effectuée de préférence au pH où l'activité enzymatique du complexe choisi est maximale ; dans ce cas, on introduit dans le milieu aqueux d'hydrolyse, si cela n'a pas été fait lors de l'extraction, un tampon convenablement choisi pour ajuster et stabiliser le pH à une valeur favorable à l'activité du complexe enzymatique utilisé.

On sait que, comme pour toute réaction enzymatique, la quantité d'enzyme à utiliser sera fonction de la nature et de l'activité du complexe enzymatique choisi, des concentrations des réactifs dans le milieu et de la durée de l'hydrolyse, et elle sera déterminée, de façon classique, par essais préalables. On pourra, par exemple, utiliser de 0,1 g à 10 g de complexe enzymatique par kg de fleurs fraîches pour une hydrolyse en solution aqueuse à pH 5, à une température voisine de 40°C, durant 16 et 30 heures.

Les composés odorants, libérés par hydrolyse des précurseurs, sont extraits du milieu aqueux dans un solvant organique non miscible à l'eau, comme un hydrocarbure aliphatique ; on choisira de préférence un solvant couramment utilisé dans l'industrie des arômes et parfums, par exemple le pentane ou l'hexane ; les compositions aromatiques isolées après distillation du solvant sous pression réduite sont un autre objet de l'invention.

Comme il est classique lors de toute extraction d'aromes à partir de végétaux, la composition, notamment quantitative, de l'extrait, dépend de l'espèce de jasmin utilisée, de la maturité de la fleur et de l'heure de la cueillette, et même de la durée écoulée entre la cueillette et l'extraction des précurseurs.

On a mis en évidence, dans les extraits selon l'invention, la présence de linalol, de géraniol, d'alcool benzylique, de phényl-2 éthanol, de méthyl-2 phénol, d'eugénol, d'isophytol, de phytol, et ce cis-jasmone, en quantités non négligeables mais dans des proportions variables et différentes de celles de l'absolu provenant des mêmes fleurs. La note odorante des compositions, objet de l'invention, est agréable mais généralement plus piquante et plus épicée que celle des absolus correspondants ; elles peuvent être utilisées en parfumerie et cosmétique, seules ou en mélange avec les extraits obtenus, par les procédés classiques, d'enfleurage ou d'extraction aux hydrocarbures.

Par le procédé de l'invention, on obtient par hydrolyse des précurseurs de 300 à 600 g environ d'une composition odorante par tonne de fleurs de jasmin qui s'ajoute au 1,5 kg environ d'absolu obtenu par extraction préalable de ces mêmes fleurs avec un solvant apolaire, comme l'hexane.

Dans ce qui suit, on décrit des exemples de réalisation de l'invention.

## Exemple 1

Les fleurs utilisées sont de l'espèce Jasminum grandiflorum L et ont été récoltées au mois de septembre près de Grasse (France). Les précurseurs ont été extraits par l'éthanol aqueux à 75 % (v/v) des fleurs broyées ; on a réalisé 3 extractions successives avec 3 l d'éthanol aqueux, par kg de fleurs fraîches, un kg correspondant à environ 10 000 fleurs.

Dans cet exemple, pour montrer que les composés odorants volatils sont aussi présents sous forme de précurseurs, on a commencé par éliminer les composants odorants volatils natifs en triturant dans du pentane le résidu obtenu après évaporation du solvant sous pression réduite.

Le nouveau résidu, contenant les précurseurs, peut être conservé dans une solution aqueuse tamponnée à pH 5.

L'identification des composés aromatiques volatils a été faite par chromatographie en phase gazeuse, par comparaison avec des échantillons de produits connus et en utilisant le nérol comme standard interne ; on a notamment recherché : le linalol, le géraniol, l'alcool benzylique, le phényl-2 éthanol, le méthyl-4 phénol, l'eugénol, l'isophytol, le phytol, et la cis-jasmone.

## Hydrolyse acide

Le résidu précédemment obtenu, qui contient des précurseurs de composés odorants, est dissous dans l'eau et la solution aqueuse acidifiée à pH 1 est portée à 80°C durant 1 heure ; les composés volatils sont alors extraits au pentane. Par chromatographie en phase gazeuse, on met en évidence la présence d'eugénol, de méthyl-4 phénol, de cis-jasmone, de phényl-2 éthanol, et d'alcool benzylique ; par contre, il n'y a ni linalol, peu stable en milieu acide, ni isophytol.

## Hydrolyse enzymatique

Le résidu de l'extraction alcoolique des fleurs après un premier traitement au pentane est dissous dans un tampon acétate (0,2 M ; pH 5) à raison de 500 ml de tampon pour 1 kg de fleurs fraîches extraites ; le tampon contient 2 mg/ml d'un complexe enzymatique à activité $\beta$-glucosidasique et le mélange est mis à incuber à 40°C pendant 12 à 32 heures. Les produits volatils odorants formés sont alors extraits dans le pentane (10 ml de pentane pour 100 ml de solution aqueuse) et isolés de façon classique.

La composition des extraits pentaniques isolés a été étudiée par chromatographie en phase gazeuse.

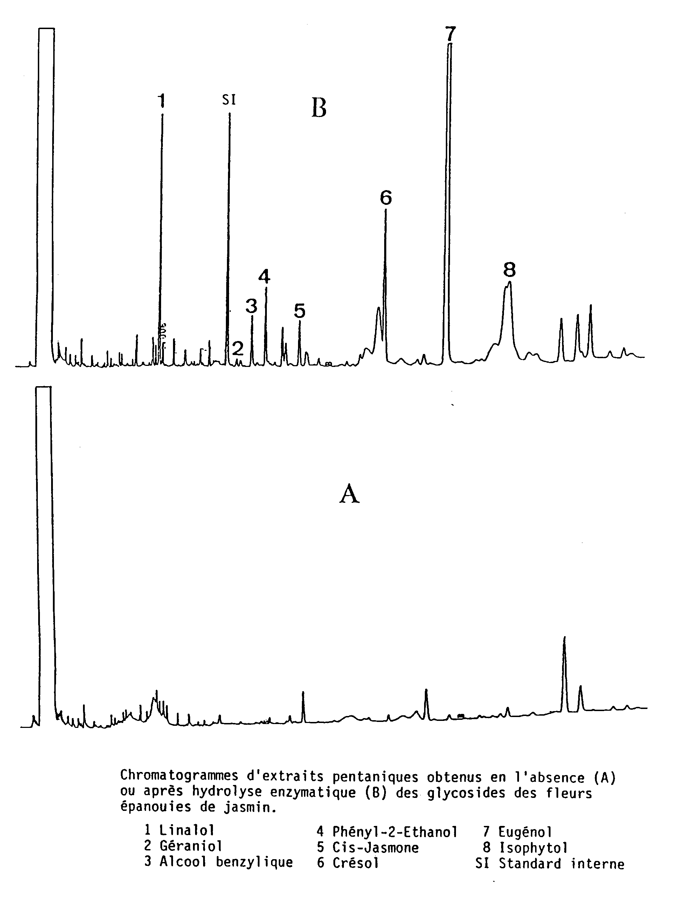

Les résultats obtenus pour différentes conditions d'hydrolyse enzymatique figurent dans les tableaux I à III ; par ailleurs, à titre d'exemple, la Figure 1 reproduit les chromatogrammes du résidu d'extraction alcoolique (A) et de l'extrait pentanique après hydrolyse (B).

Dans le tableau I, figurent les résultats obtenus lors de 6 opérations simultanées d'hydrolyse, réalisée dans les mêmes conditions mais avec un complexe enzymatique différent dans chaque cas. Les résultats sont exprimés, pour chacun des composés, en pourcentage de la quantité maximale de ce composé formée au cours de l'un de ces 6 essais, ce qui met en évidence que la composition quantitative des extraits odorants de l'invention dépend de l'enzyme mise en oeuvre lors de l'hydrolyse.

Dans le tableau II, figurent les compositions des extraits pentaniques de divers prélèvements effectués dans le milieu réactionnel au cours d'une seule opération d'hydrolyse catalysée par le complexe enzymatique Rohament CW 1 commercialisé par Rohm et Hass. Les résultats sont aussi exprimés en pourcentage de la quantité maximale isolée pour chaque composé lors de l'un des 6 prélèvements et montrent que la composition de l'extrait préparé est fonction de la durée d'hydrolyse.

Dans le tableau III, on a indiqué les compositions des extraits obtenus lors de 5 essais simultanés d'hydrolyse d'un même extrait alcoolique de précurseurs, avec le complexe enzymatique Rohament CW 1 en quantités variables (0,2 à 5 mg/ml). L'extraction au pentane a été effectuée après 24 heures de réaction à 40°C. Les résultats sont exprimés pour chaque composé en pourcentage de la quantité maximale dudit composé formé au cours de l'un des essais.

Exemple 2

Des fleurs de Jasminum grandiflorum récoltées le matin au mois de septembre près de Grasse ont été extraites 24 heures plus tard par de l'hexane froid selon le procédé classique. Après égouttage du solvant utilisé lors de la 3ème extraction, les fleurs sont soumises à l'action de la vapeur d'eau pour éliminer l'hexane résiduel (1 heure).

Les organes ainsi traités sont ensuite extraits trois fois à l'eau déminéralisée tiède (40°C) dont le pH a été ajusté à 5 avec un tampon dans les conditions suivantes :
* 1ère extraction de 30 min avec 100 l d'eau pour 100 kg de fleurs et égouttage 20 min
* 2ème extraction de 30 min avec 100 l d'eau pour 100 kg de fleurs et égouttage 30 min
* 3ème extraction de 30 min avec 50 l d'eau pour 100 kg de fleurs et égouttage 30 min

On a réuni les 3 solutions d'extraction et introduit 500 g d'enzyme Rohament CW dans le milieu ; puis, l'ensemble a été incubé à 40°C pendant 24 heures. Les produits volatils odorants formés ont alors été extraits dans l'hexane à raison de 10 l d'hexane pour 100 l de phase aqueuse. La phase organique a été isolée par décantation, et le solvant a été distillé pour donner 40 g d'un produit dont l'analyse chromatographique a révélé la présence des composés odorants attendus.

TABLEAU I

(quantités exprimées en %)

| COMPLEXE ENZYMATIQUE<br><br>COMPOSE<br>Composé | β GLUCOSIDASE<br><br>(SIGMA) | Rohament CW 1<br>(Rohm et HASS) | DRUM PECTINASE<br>(GIST et BROCADES) | Rohament CT<br>(Rohm et HASS) | PECTOLASE 3 PA<br>(GRINTED) | Hémi-cellulase<br>(GIST et BROCADES) |
|---|---|---|---|---|---|---|
| Linalol | 21,0 | 100 | 24,6 | 51,3 | 17,3 | 30,6 |
| Géraniol | 92,0 | 74,6 | 57,1 | 47,6 | 100 | 68,3 |
| Alcool benzylique | 100 | 89,6 | 92,8 | 38,1 | 52,9 | 73,99 |
| Phényl-2 éthanol | 34,7 | 100 | 84,6 | 17,0 | 67,4 | 72,5 |
| Cis-jasmone | 92,4 | 100 | 52,4 | 84,2 | 92,4 | 80,0 |
| Para méthyle phénol | 75,2 | 100 | 79,0 | 72,6 | 85,9 | 69,5 |
| Eugénol | 89,3 | 100 | 38,2 | 67,6 | 28,7 | 56,2 |
| Isophytol | 100 | 85,5 | 61,7 | 84,7 | 90,0 | 86,4 |
| Nombre de pics majeurs | 11 | 11 | 9 | 8 | 10 | 13 |
| Parfum | équilibré floral | fort floral | peu prononcé | équilibré volatil | faible équilibré | fort eugénol |

TABLEAU II

(quantités exprimées en %)

| DUREE<br>COMPOSES | 1 h | 3 h | 6 h | 12 h | 24 h | 32 h |
|---|---|---|---|---|---|---|
| Linalol | 10,3 | 18,6 | 18,2 | 53,1 | 85,3 | 100 |
| Géraniol | 26,9 | 27,7 | 30,2 | 35,3 | 64,7 | 100 |
| Alcool benzylique | 33,0 | 33,7 | 56,8 | 50,7 | 66,8 | 100 |
| Phényl-2 éthanol | 20,75 | 39,7 | 37,6 | 34,8 | 83,2 | 100 |
| Cis-jasmone | 47,4 | 34,7 | 25,6 | 43,8 | 100 | 35,5 |
| Para méthyle phénol | 64,8 | 70,2 | 55,2 | 87,4 | 91,4 | 100 |
| Eugénol | 33,3 | 30,2 | 33,6 | 100 | 96,1 | 73,1 |
| Isophytol | 33,7 | 28,1 | 32,3 | 100 | 93,7 | 62,9 |
| Nombre de pics majeurs | 10 | 12 | 9 | 12 | 14 | 12 |

TABLEAU III

| ENZYME mg/mL / COMPOSES | 0,2 | 0,5 | 1 | 2 | 5 |
|---|---|---|---|---|---|
| Linalol | 11,8 | 28,6 | 49,8 | 82,4 | 100 |
| Géraniol | 25,2 | 35,2 | 100 | 56,0 | 39,2 |
| Alcool benzylique | 22,0 | 43,7 | 71,4 | 82,4 | 100 |
| Phényl-2 éthanol | 96,6 | 83,4 | 97,5 | 91,0 | 100 |
| Cis-jasmone | 87,3 | 85,8 | 100 | 78,2 | 60,7 |
| Para méthyle phénol | 77,9 | 92,6 | 81,5 | 96,5 | 100 |
| Eugénol | 46,3 | 80,9 | 88,5 | 100 | 86,1 |
| Isophytol | 64,5 | 83,9 | 100 | 81,0 | 74,0 |
| Nombre de pics majeurs | 9 | 9 | 10 | 10 | 10 |
| Parfum | doux | plus frais | équi-libré | eugénol | trop fort |

## Revendications

1. Procédé de préparation d'une composition odorante de fleurs de jasmin, caractérisé en ce que l'on hydrolyse les composés isolés par extraction des fleurs par un solvant polaire et en ce que l'on isole les composés odorants formés.

2. Procédé selon la revendication 1, caractérisé en ce que le solvant d'extraction est un solvanc aqueux.

**3.** Procédé selon la revendication 1, caractérisé en ce que le solvant d'extraction est une solution aqueuse dont le pH est fixé par addition d'un tampon à une valeur comprise entre 4 et 6.

**4.** Procédé selon la revendication 2, caractérisé en ce que le solvant d'extraction est un mélange de méthanol ou d'éthanol, avec au moins 20 % d'eau.

**5.** Procédé selon l'une des revendications 1 à 4, caractérisé en ce que l'hydrolyse est effectuée par action d'un acide en milieu aqueux.

**6.** Procédé selon l'une des revendications 1 à 4, caractérisé en ce que l'hydrolyse est effectuée par voie enzymatique, sous l'action d'une hydrolase.

**7.** Procédé selon la revendication 6, caractérisé en ce que l'hydrolase a une activité $\beta$-glycosidasique.

**8.** Procédé selon l'une des revendications 1 à 7, caractérisé en ce que les composés odorants sont extraits du milieu aqueux d'hydrolyse dans un solvant hydrocarboné non miscible à l'eau.

**9.** Procédé selon l'une des revendications 1 à 8, caractérisé en ce que les fleurs ont été préalablement traitées par un solvant apolaire pour en extraire les composés odorants volatils.

**Claims**

**1.** Process for the preparation of a fragrant composition of jasmine flowers, characterized in that the compounds isolated by extraction from the flowers are hydrolyzed with a polar solvent and in that the formed fragrant compounds are isolated.

**2.** Process according to claim 1, characterized in that the extraction solvent is an aqueous solvent.

**3.** Process according to claim 1, characterized in that the extraction solvent is an aqueous solution of which the pH is fixed, by addition of a buffer, to a value ranging between 4 and 6.

**4.** Process according to claim 2, characterized in that the extraction solvent is a mixture of methanol or ethanol, with at least 20% water.

**5.** Process according to one of claims 1 to 4, characterized in that the hydrolysis is obtained by the action of an acid in aqueous medium.

**6.** Process according to one of claims 1 to 4, characterized in that the hydrolysis is performed by enzymatic route, under the action of a hydrolase.

**7.** Process according to claim 6, characterized in that the hydrolase has a $\beta$-glycosidasic activity.

**8.** Process according to one of claims 1 to 7, characterized in that the fragrant compounds are extracted from the hydrolysis aqueous medium in a hydrocarbon solvent non-miscible with water.

**9.** Process according to one of claims 1 to 8, characterized in that the flowers are treated beforehand with a non-polar solvent to extract therefrom the volatile fragrant compounds.

**Patentansprüche**

**1.** Verfahren zur Herstellung einer Duftkomposition aus Jasminblüten, dadurch gekennzeichnet, daß die durch Extraktion der Blüten mit einem polaren Lösungsmittel isolierten Verbindungen hydrolysiert und die gebildeten Duftverbindungen abgetrennt werden.

**2.** Verfahren nach Anspruch 1, dadurch gekennzeichnet, daß das Extraktionslösungsmittel ein wässeriges Lösungsmittel ist.

**3.** Verfahren nach Anspruch 1, dadurch gekennzeichnet, daß das Extraktionslösungsmittel eine wässerige Lösung ist, deren pH durch Zugabe eines Puffers auf einen Wert zwischen 4 und 6 fixiert wird.

4.  Verfahren nach Anspruch 2, dadurch gekennzeichnet, daß das Extraktionslösungsmittel eine Mischung aus Methanol oder Ethanol mit mindestens 20 % Wasser ist.

5.  Verfahren nach einem der Ansprüche 1 bis 4, dadurch gekennzeichnet, daß die Hydrolyse durch Zugabe einer Säure in wässerigem Medium bewirkt wird.

6.  Verfahren nach einem der Ansprüche 1 bis 4, dadurch gekennzeichnet, daß die Hydrolyse auf enzymatischem Weg unter Einwirkung eines Hydrolase bewirkt wird.

7.  Verfahren nach Anspruch 6, dadurch gekennzeichnet, daß die Hydrolase $\beta$-Glycosidaseaktivität aufweist.

8.  Verfahren nach einem der Ansprüche 1 bis 7, dadurch gekennzeichnet, daß die Duftverbindungen aus dem wässerigen Hydrolysemedium in einem mit Wasser nicht mischbaren kohlenwasserstoffhältigen Lösungsmittel extrahiert werden.

9.  Verfahren nach einem der Ansprüche 1 bis 8, dadurch gekennzeichnet, daß die Blüten mit einem apolaren Lösungsmittel vorbehandelt werden, um die flüchtigen Duftverbindungen zu extrahieren.

Chromatogrammes d'extraits pentaniques obtenus en l'absence (A)
ou après hydrolyse enzymatique (B) des glycosides des fleurs
épanouies de jasmin.

| | | |
|---|---|---|
| 1 Linalol | 4 Phényl-2-Ethanol | 7 Eugénol |
| 2 Géraniol | 5 Cis-Jasmone | 8 Isophytol |
| 3 Alcool benzylique | 6 Crésol | SI Standard interne |